(19) Europäisches Patentamt
European Patent Office
Office européen des brevets

(11) Veröffentlichungsnummer: **0 315 832 B1**

(12) **EUROPÄISCHE PATENTSCHRIFT**

(45) Veröffentlichungstag der Patentschrift: **18.03.92**

(51) Int. Cl.[5]: **C08G 18/10**, C08G 18/28, C08G 63/91, C08G 65/32, C08G 69/48

(21) Anmeldenummer: **88117915.4**

(22) Anmeldetag: **27.10.88**

Verbunden mit 88910022.8/0377677 (europäische Anmeldenummer/Veröffentlichungsnummer) durch Entscheidung vom 25.10.90.

(54) **Verfahren zur Herstellung von Makromonomeren und nach diesem Verfahren hergestellte Makromonomere.**

(30) Priorität: **10.11.87 DE 3738079**

(43) Veröffentlichungstag der Anmeldung: **17.05.89 Patentblatt 89/20**

(45) Bekanntmachung des Hinweises auf die Patenterteilung: **18.03.92 Patentblatt 92/12**

(84) Benannte Vertragsstaaten: **AT BE CH DE ES FR GB IT LI NL SE**

(56) Entgegenhaltungen:
**EP-A- 0 043 966**
**EP-A- 0 084 670**
**EP-A- 0 165 849**
**DE-A- 2 637 690**

(73) Patentinhaber: **BASF Lacke + Farben Aktiengesellschaft**
**Max-Winkelmann-Strasse 80**
**W-4400 Münster(DE)**

(72) Erfinder: **Hille, Hans-Dieter**
**In der Schlade 24**
**W-5060 Bergisch-Gladbach(DE)**
Erfinder: **Dobbelstein, Arnold, Dr.**
**Emil-Nolde-Weg 95**
**W-4400 Münster(DE)**

(74) Vertreter: **Leifert, Elmar, Dr.**
**BASF Lacke + Farben AG Patentabteilung**
**Max-Winkelmann-Strasse 80 Postfach 61 23**
**W-4400 Münster(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Die Erfindung betrifft ein Verfahren zur Herstellung von Makromonomeren, die an einem Ende mindestens zwei Hydroxylgruppen tragen.

Unter Makromonomeren werden verhältnismäßig kurzkettige Polymere oder Oligomere verstanden, die an einem Ende zur Polymerisation, Polyaddition oder Polykondensation befähigte funktionelle Gruppen aufweisen.

Makromonomere dienen insbesondere zur Herstellung von Pfropfcopolymeren. Es ist bekannt, daß Polyether, die an einem Ende zwei Hydroxylgruppen tragen, als Makromonomere eingesetzt werden können. Derartige Polyether werden hergestellt, indem die Polymerisation von Alkylenoxiden mit einem Acetal bzw. Ketal, das neben der Acetal- bzw. Ketalgruppierung noch eine H-acide Gruppe enthält, gestartet wird. Aus den so erhaltenen Reaktionsprodukten werden nach Blockierung der endständigen Hydroxylgruppen Polyether1,2- bzw. -1,3-diole durch Spaltung der Acetal- bzw. Ketalgruppierung erhalten (vgl. z.B. DE-OS-30 25 807).

Das oben beschriebene Verfahren zur Herstellung der als Makromonomere einsetzbaren Polyether ist mit relativ hohem Aufwand verbunden und ist nur zur Herstellung von Makromonomeren auf Basis von Polyalkylenoxiden geeignet.

Zur Herstellung von wasserverdünnbaren Polymeren wäre es wünschenswert, carboxylgruppentragende Makromonomere zur Verfügung zu haben.

Die der vorliegenden Erfindung zugrundeliegende Aufgabenstellung liegt in der Bereitstellung eines neuen Verfahrens zur Herstellung von Makromonomeren, die im Mittel pro Molekül mindestens eine Carboxylgruppe sowie an einem Ende mindestens zwei Hydroxylgruppen tragen.

Diese Aufgabe wird durch ein Verfahren gelöst, das dadurch gekennzeichnet ist, daß

(1) ein ein zahlenmittleres Molekulargewicht von 300 bis 3000, vorzugsweise 500 bis 2000, aufweisendes Polyester-, Polyether-, Polyurethan, Polyharnstoff- oder Polyamidpräpolymer, das im Mittel eine endständige Hydroxyl-oder Aminogruppe und mindestens eine Carboxylgruppe pro Molekül enthält, mit einem Diisocyanat zu einem im Mittel eine endständige Isocyanatgruppe und mindestens eine Carboxylgruppe pro Molekül enthaltenden Zwischenprodukt umgesetzt wird und dieses Zwischenprodukt anschließend

(2) mit einer Verbindung, die ein zahlenmittleres Molekulargewicht von 90 bis 800, vorzugsweise 120 bis 300, aufweist und die neben einer gegenüber Isocyanatgruppen reaktiven Gruppe noch mindestens zwei Hydroxylgruppen enthält, zu einem Makromonomer umgesetzt wird, das im Mittel pro Molekül mindestens eine Carboxylgruppe sowie an einem Ende mindestens zwei Hydroxylgruppen trägt.

Die durch die Erfindung erreichten Vorteile sind im wesentlichen darin zu sehen, daß das erfindungsgemäße Verfahren auf einfache Art und Weise die Herstellung von carboxylgruppentragenden Makromonomeren ermöglicht und daß das erfindungsgemäße Verfahren mit unterschiedlichsten, leicht zugänglichen Präpolymeren mit relativ geringem Aufwand durchgeführt werden kann.

Bei dem erfindungsgemäßen Verfahren handelt es sich um ein Zweistufenverfahren. Die erste Stufe besteht in der Umsetzung eines ein zahlenmittleres Molekulargewicht von 300 bis 3000, vorzugsweise 500 bis 2000, aufweisenden Polyester-, Polyether-, Polyurethan-, Polyharnstoff- oder Polyamidpräpolymeren, das im Mittel eine endständige Hydroxyl-oder Aminogruppe und mindestens eine Carboxylgruppe pro Molekül enthält, mit einem Diisocyanat zu einem im Mittel eine endständige Isocyanatgruppe und mindestens eine Carboxylgruppe pro Molekül enthaltenden Zwischenprodukt.

Als Präpolymere geeignete Polyester sind z.B. erhältich, indem Dialkohole und Dicarbonsäuren bzw. reaktive Dialkohol-bzw. Dicarbonsäurederivate (wie. z.B. Dicarbonsäureanhydride) nach allgemein gut bekannten Methoden polykondensiert werden, wobei die Dialkoholkomponente und die Dicarbonsäurekomponente in einem Molverhältnis von 1:1 eingesetzt werden und die Polykondensationsreaktion nach Erreichen des gewünschten Molekulargewichts abgebrochen wird. Zur Ermittlung des Molekulargewichts der Polyester genügt die einfache Bestimmung der Säurezahl. Das Molekulargewicht kann dann mit Hilfe der Formel

$$M = \frac{56100}{SZ}$$

(M = Zahlenmittleres Molekulargewicht, SZ = Säurezahl) berechnet werden. Ein Abbruch der Polykondensationsreaktion kann z.B. durch Kühlung des Reaktionsansatzes erreicht werden.

Für die Herstellung der Polyesterpräpolymere können aliphatische, cycloaliphatische (gesättigt oder ungesättigt) und/oder aromatische Dicarbonsäuren mit vorzugsweise 2 bis 14, besonders bevorzugt 4 bis 12, C-Atomen pro Molekül oder deren veresterungsfähige Derivate (z.B. Anhydride oder Ester), z.B.

Phthalsäure, Isophthalsäure, Terephthalsäure, Tetrahydro- und Hexahydrophthalsäureanhydrid, Endomethylentetrahydrophthalsäure, Bernsteinsäure, Glutarsäure, Sebacinsäure, Azelainsäure, Fumarsäure und Maleinsäure, eingesetzt werden.

Für die Herstellung der Polyesterpräpolymere können aliphatische, cycloaliphatische und/oder araliphatische Dialkohole mit vorzugsweise 2 bis 15, besonders bevorzugt 2 bis 6, C-Atomen, wie z.B. Glykole wie Ethylenglycol, Propandiol, Butandiol, 2-Ethylpropandiol-1,3, 2-Ethylhexandiol-1,3, Neopentylglykol, 2,2-Trimethylpentandiol-1,3, Hexandiol-1,6, Cyclohexandiol-1,2 und -1,4, 1,2- und 1,4-Bis-(hydroxymethyl)-cyclohexan, Adipinsäure-bis-(ethylenglykolester), Etheralkohole wie Di- und Triethylenglykol und Dipropylenglykol, eingesetzt werden.

Als Präpolymere geeignete Polyester sind auch durch Selbstkondensation von Hydroxycarbonsäuren, vorzugsweise Hydroxystearinsäure, erhältlich.

Eine weitere wichtige Methode zur Herstellung geeigneter Polyesterpräpolymere besteht darin, daß ein Polyester, der im Mittel pro Molekül zwei endständige Hydroxylgruppen aufweist (im folgenden als Polyesterdiol bezeichnet), mit einem vorzugsweise cyclischen Polycarbonsäureanhydrid, vorzugsweise einem cyclischen Dicarbonsäureanhydrid, bei Reaktionstemperaturen, die 80 ° C nicht übersteigen, in einem solchen stöchiometrischen Verhältnis umgesetzt wird, daß Polyesterpräpolymere entstehen, die im Mittel eine endständige Hydroxylgruppe und mindestens eine, vorzugsweise nur eine, Carboxylgruppe pro Molekül enthalten.

Die verwendeten Polyesterdiole können aus den bereits oben ausführlich beschriebenen Dicarbonsäure- und Dialkoholkomponenten aufgebaut sein.

Die Polyesterdiole werden bevorzugt mit einem cyclischen Dicarbonsäureanhydrid umgesetzt. Die Umsetzung mit Carbonsäureanhydriden, die zu Präpolymeren mit mehr als seiner Carboxylgruppe führen, ist weniger bevorzugt.

Bei der Umsetzung des Polyesterdiols mit dem Polycarbonsäureanhydrid werden die stöchiometrischen Verhältnisse zwischen Polyesterdiol und Polycarbonsäureanhydrid so gewählt (im allgemeinen werden pro Mol Polyesterdiol ein Mol Polycarbonsäureanhydrid eingesetzt), daß im Mittel nur eine Hydroxylgruppe pro Polyesterdiolmolekül verestert wird. Die Umsetzung zwischen Polyesterdiol und Polycarbonsäureanhydrid wird vorzugsweise in einem organischen Lösemittel wie z.B. Methylethylketon oder Aceton durchgeführt.

Es können selbstverständlich auch Polyesterpräpolymere eingesetzt werden, die in der Polymerkette neben Esterbindungen auch noch Ether- und/oder Urethan- und/oder Harnstoff-und/oder Amidbindungen enthalten.

Besonders bevorzugte Polyesterpräpolymere sind die Präpolymere, die wie oben beschrieben durch Umsetzung eines Polyesterdiols mit Tetrahydrophthalsäureanhydrid erhältlich sind.

Als Präpolymere geeignete Polyether sind erhältlich, indem Polyetherpolyole, vorzugsweise Polyetherdiole, mit einem vorzugsweise cyclischen Polycarbonsäureanhydrid, vorzugsweise mit einem cyclischen Dicarbonsäureanhydrid, besonders bevorzugt mit Tetrahydrophthalsäureanhydrid, in solchen stöchiometrischen Verhältnissen umgesetzt werden, daß Polyetherpräpolymere entstehen, die pro Molekül im Mittel eine endständige Hydroxylgruppe und mindestens eine, vorzugsweise nur eine, Carboxylgruppe enthalten.

Als Beispiele für geeignete Polyetherdiole, die zur Herstellung der Polyetherpräpolymere geeignet sind, werden Poly(ethylenoxid)glykol, Poly(propylenoxid)glykol, Poly(butylenoxid)glykol und Poly-(oxtetramethylen)glykol genannt.

Es können selbstverständlich auch Polyetherpräpolymere eingesetzt werden, die in der Polymerkette neben Etherbindungen auch Ester- und/oder Urethan- und/oder Harnstoff- und/oder Amidbindungen enthalten.

Geeignete Polyurethan- bzw. Polyharnstoffpräpolymere sind z.B. erhältlich, indem hydroxyl- bzw. aminogruppenhaltige Polyurethane bzw. Polyharnstoffe, vorzugsweise Polyurethane bzw. Polyharnstoffe mit zwei endständigen Hydroxyl- bzw. zwei endständigen Aminogruppen, mit einem vorzugsweise cyclischen Polycarbonsäureanhydrid, vorzugsweise cyclischen Dicarbonsäureanhydrid, besonders bevorzugt Tetrahydrophthalsäureanhydrid, zu Präpolymeren umgesetzt werden, die im Mittel pro Molekül eine endständige Hydroxyl- bzw. Aminogruppe und mindestens eine, vorzugsweise nur eine, Carboxylgruppe enthalten.

Polyurethane bzw. Polyharnstoffe, die zwei endständige Hydroxyl- bzw. zwei endständige Aminogruppen pro Molekül enthalten, können nach allgemein gut bekannten Methoden durch Umsetzung entsprechender stöchiometrischer Mengen an Diisocyanat und Dihydroxy- bzw. Diaminoverbindungen hergestellt werden.

Zur Herstellung der hydroxyl- bzw. aminogruppenhaltigen Polyurethane bzw. Polyharnstoffe können aliphatische, cycloaliphatische, araliphatische und aromatische Diisocyanate verwendet werden, die vorzugsweise 4 bis 25, besonders bevorzugt 4 bis 16, Kohlenstoffatome enthalten. Als Beispiele seien genannt: Isophorondiisocyanat, Trimethylendiisocyanat, Tetramethylendiisocyanat, Pentamethylendiisocyanat, Hexamethylendiisocyanat, Ethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4′-Biphenylendiisocyanat, 1,5-Naphthylendiisocyanat, 1,4-Naphthylendiisocyanat, 1-Isocyanatomethyl-5-isocyanato-1,3,3-trimethylcyclohexan, Bis-(4-isocyanatocyclohexyl)methan, Bis-(4-isocyanatophenyl)methan, 4,4′-Diisocyanatodiphenylether und 2,3-Bis-(8-isocyanatooktyl)-4-oktyl-5-hexylcyclohexen.

Für die Herstellung der hydroxyl- bzw. aminogruppenhaltigen Polyurethane bzw. Polyharnstoffe geeignete Dihydroxy- bzw. Diaminoverbindungen sind z.B. aliphatische, cycloaliphatische und/oder araliphatische Dialkohole bzw. Diaminoverbindungen mit 2 bis 15, vorzugsweise 2 bis 6, Kohlenstoffatomen wie z.B. Glykole, wie Ethylenglykol, Propandiol, Butandiol, 2-Ethylpropandiol-1,3, 2-Ethylhexandiol-1,3, Neopentylglykol, 2,2-Trimethylpentandiol-1,3, Hexandiol, Cyclohexandiol, 1,4-Bis-(hydroxymethyl)-cyclohexan, Adipinsäure-bis-(ethylenglykol)ester, Etheralkohole wie Di- und Triethylenglykol sowie Dipropylenglykol, Ethylendiamin, 1,2- oder 1,3-Propylendiamin, 1,6-Hexandiamin, 2-Methyl-1,6-hexandiamin, 1-Methyl-2,4-diamino-cyclohexan, 1,3- oder 1,4-Bis-(aminomethyl)-cyclohexan, 4,4′-Diaminodicyclohexylmethan oder ähnliche, an sich bekannte Diamine.

Es können selbstverständlich auch Polyurethan- bzw. Polyharnstoffpräpolymere eingesetzt werden, die in der Polymerkette neben den Urethan- bzw. Harnstoffbindungen auch noch Ester-und/oder Ether- und/oder Urethan- und/oder Harnstoff- und/oder Amidbindungen enthalten.

Als Präpolymere geeignete Polyamide sind z.B. erhältlich, indem Diamine und Dicarbonsäuren bzw. reaktive Dicarbonsäurederivate nach allgemein gut bekannten Methoden polykondensiert werden, wobei Diamine und Dicarbonsäuren im Molverhältnis 1:1 eingesetzt werden und die Polykondensationsreaktion nach Erreichen des gewünschten Molekulargewichtes abgebrochen wird. Auf diese Weise werden Polyamidpräpolymere erhalten, die im Mittel pro Molekül eine endständige Aminogruppe und eine Carboxylgruppe enthalten.

Als Präpolymere geeignete Polyamide sind auch erhältlich, indem Polyamide mit endständigen Aminogruppen mit einem vorzugsweise cyclischen Polycarbonsäureanhydrid, vorzugsweise mit einem cyclischen Dicarbonsäureanhydrid, besonders bevorzugt mit Tetrahydrophthalsäureanhydrid, in solchen stöchiometrischen Verhältnissen umgesetzt werden, daß Polyamidpräpolymere entstehen, die pro Molekül im Mittel eine endständige Aminogruppe und mindestens eine, vorzugsweise eine, Carboxylgruppe enthalten.

Es können selbstverständlich auch Polyamidpräpolymere eingesetzt werden, die in der Polymerkette neben den Amidbindungen auch noch Ester- und/oder Ether- und/oder Urethan- und/oder Harnstoffbindungen enthalten.

Die erfindungsgemäß eingesetzten Präpolymere dürfen neben den Carboxyl- und Hydroxyl- bzw. Aminogruppen keine funktionellen Gruppen enthalten, die unter den zur Herstellung der erfindungsgemäßen Makromonomere angewandten Reaktionsbedingungen gegenüber NCO-Gruppen reaktiv sind.

Das erfindungsgemäße Verfahren wird vorzugsweise mit Polyesterpräpolymeren durchgeführt. Das erfindungsgemäße Verfahren wird ganz besonders bevorzugt mit Polyesterpräpolymeren durchgeführt, die durch Umsetzung eines Polyesterdiols mit Tetrahydrophthalsäureanhydrid erhältlich sind.

In der ersten Stufe der Herstellung der erfindungsgemäßen Makromonomere wird eines der oben beschriebenen Präpolymere mit einem Diisocyanat zu einem im Mittel eine endständige Isocyanatgruppe und mindestens eine Carboxylgruppe pro Molekül enthaltenden Zwischenprodukt umgesetzt.

Zur Herstellung der gewünschten Zwischenprodukte werden Diisocyanat und Präpolymer vorzugsweise in einem Molverhältnis von 1:1 umgesetzt.

Die Umsetzung zwischen Diisocyanat und Präpolymer muß so geführt werden, daß möglichst alle Hydroxyl- bzw. Aminogruppen bzw. der überwiegende Anteil der Hydroxyl- bzw. Aminogruppen und möglichst keine Carboxylgruppe bzw. nur ein sehr geringer Anteil der Carboxylgruppen mit Isocyanatgruppen reagiert. Dies kann z.B. erreicht werden, indem Präpolymere eingesetzt werden, die gegenüber NCO-Gruppen möglichst reaktionsträge Carboxylgruppen und gegenüber NCO-Gruppen möglichst reaktionsfreudige Hydroxyl- bzw. Aminogruppen enthalten. Bekanntlicherweise kann hinsichtlich der Reaktivität gegenüber an (cyclo)aliphatische Molekülfragmente gebundene NCO-Gruppen im allgemeinen von folgender Reaktivitätsreihe ausgegangen werden:

$$-NH_2 > \rangle NH > -CH_2-OH > \rangle CH-OH > -\overset{|}{\underset{|}{C}}-OH.$$

Als Beispiel für reaktionsträge Carboxylgruppen werden sterisch gehinderte Carboxylgruppen genannt. Außerdem kann die Reaktivität von Carboxylgruppen durch Salzbildung herabgesetzt werden. Weitere Maßnahmen zur Steuerung der Umsetzung in die gewünschte Richtung bestehen in der Wahl der

Reaktionstemperatur und Wahl der Reaktionszeit. Als Faustregel kann angegeben werden, daß mit geringer werdendem Reaktivitätsunterschied zwischen Carboxylgruppen und Hydroxyl- bzw. Aminogruppen die Reaktionstemperatur abgesenkt und die Reaktionszeit verkürzt werden muß. Die Umsetzung zwischen Präpolymer und Diisocyanat wird vorzugsweise nach gut bekannten Methoden der Polyurethanchemie katalysiert und wird vorzugsweise in organischen Lösemitteln wie z.B. Methylethylketon und Aceton durchgeführt.

Als Diisocyanate werden vorzugsweise Diisocyanate verwendet, in denen die Isocyanatgruppen an (cyclo-)aliphatische Molekülfragmente gebunden sind. Diisocyanate, in denen die Isocyanatgruppen an aromatische Molekülfragmente gebunden sind, sind aufgrund ihrer hohen Reaktivität nur in Ausnahmefällen geeignet. Die eingesetzten Diisocyanate enthalten vorzugsweise 4 bis 25, besonders bevorzugt 4 bis 16, Kohlenstoffatome pro Molekül.

Als Beispiele für geeignete Diisocyanate werden genannt: Ethylendiisocyanat, Tetramethylendiisocyanat, Hexamethylendiisocyanat, Trimethylhexamethylendiisocyanat, Dodecandiisocyanat, Diisocyanatodipropylether, Cyclohexandiisocyanat, Diisocyanatomethylcyclohexan, Isophorondiisocyanat und Dicyclohexylmethandiisocyanat.

Bevorzugt eingesetzte Diisocyanate sind Isophorondiisocyanat, Dicyclohexylmethandiisocyanat, Hexamethylendiisocyanat und Tetramethylxyloldiisocyanat. Besonders bevorzugt wird Isophorondiisocyanat eingesetzt.

Besonders bevorzugt Zwischenprodukte werden erhalten, wenn ein Polyesterpräpolymer, das eine primäre Hydroxylgruppe und eine von Tetrahydrophthalsäure herrührende endständige Carboxylgruppe enthält, mit einem (cyclo)aliphatischen Diisocyanat, vorzugsweise Isophorondiisocyanat, in einem organischen Lösemittel, vorzugsweise Methylethylketon oder Aceton, bei Reaktionstemperaturen kleiner 80 °C bis zum theoretisch berechneten NCO-Gehalt umgesetzt wird.

In der zweiten Stufe der Herstellung der erfindungsgemäßen Makromonomere wird das in der ersten Stufe hergestellte Zwischenprodukte mit einer Verbindung, die ein Molekulargewicht von 90 bis 800, vorzugsweise von 120 bis 300, aufweist und die neben einer gegenüber Isocyanatgruppen reaktiven Gruppe noch mindestens zwei Hydroxylgruppen enthält (im folgenden als Polyolkomponente bezeichnet), in solchen stöchiometrischen Mengen (im allgemeinen werden pro NCO-Äquivalent 1 Mol der Polyolkomponente eingesetzt) umgesetzt, daß Makromonomere erhalten werden, die im Mittel pro Molekül mindestens eine Carboxylgruppe, vorzugsweise nur eine Carboxylgruppe, sowie an einem Ende mindestens zwei Hydroxylgruppen tragen.

Einsetzbare Polyolkomponenten sind Polyole und Polyole, die neben den Hydroxylgruppen noch eine Aminogruppe enthalten sowie Polyole, die neben den Hydroxylgruppen noch eine Mercaptogruppe enthalten. Vorzugsweise werden Polyole und Polyole, die neben den Hydroxylgruppen noch eine Aminogruppe enthalten, eingesetzt. Als Beispiele für einsetzbare Polyolkomponenten werden Triole, Tetrole, Trimethylolethan, Trimethylolpropan, Ditrimethylolpropan, Glycerin, Triethanolamin, Diethanolamin, 2-Amino-2-methylpropandiol-1,3, 2-Amino-2-hydroxymethylpropandiol und 2-Amino-2-ethyl-1,3-propandiol genannt. Die Polyole können selbstverständlich auch in Form ihrer Acetale oder Ketale eingesetzt werden. Nach erfolgter Umsetzung können die noch erhaltenen Acetal- oder Ketalstrukturen durch Einwirkung von Säuren gespalten werden.

Besonders bevorzugte Polyolkomponenten sind Trimethylolpropan und Ditrimethylpropan.

Die Umsetzung der Polyolkomponente mit dem Zwischenprodukt wird zweckmäßigerweise in einem inerten organischen Lösemittel (z.B. Methylethylketon oder Aceton) bei Temperaturen von Raumtemperatur bis zu etwa 90 ° durchgeführt und kann auch nach allgemein gut bekannten Methoden katalysiert werden. Auch bei dieser Umsetzung muß sorgfältig darauf geachtet werden, daß es zu keiner bzw. nur zu geringfügigen Umsetzungen zwischen -NCO- und -COOH-Gruppen kommt. Dies kann z.B. erreicht werden, indem Polyolkomponenten mit einer gegenüber -NCO-Gruppen besonders reaktionsfreudigen Amino-, Mercapto-oder Hydroxylgruppe eingesetzt werden. Weitere Maßnahmen zur Steuerung der Umsetzung in die gewünschte Richtung bestehen in der Wahl der Reaktionstemperatur und Wahl der Reaktionszeit. Als Faustregel kann angegeben werden, daß mit geringer werdendem Reaktivitätsunterschied zwischen Carboxylgruppen und Amino-, Mercapto- oder Hydroxylgruppen die Reaktionstemperatur abgesenkt und die Reaktionszeit verkürzt werden muß.

Eine bevorzugte Ausführungsform der 2. Herstellungsstufe besteht darin, daß die Polyolkomponente vorgelegt wird und das Zwischenprodukt langsam zugegeben wird.

Die Erfindung betrifft auch neue Makromonomere. Die erfindungsgemäßen Makromonomere zeichnen sich dadurch aus, daß sie erhältlich sind, indem

(1) ein ein zahlenmittleres Molekulargewicht von 300 bis 3000, vorzugsweise 500 bis 2000, aufweisendes Polyester-, Polyether-, Polyurethan, Polyharnstoff- oder Polyamidpräpolymer, das im Mittel eine endständige Hydroxyl-oder Aminogruppe und mindestens eine Carboxylgruppe pro Molekül enthält, mit einem Diisocyanat zu einem im Mittel eine endständige Isocyanatgruppe und mindestens eine Carboxylgruppe pro Molekül enthaltenden Zwischenprodukt umgesetzt wird und dieses Zwischenprodukt anschließend
(2) mit einer Verbindung, die ein Molekulargewicht von 90 bis 800, vorzugsweise 120 bis 300, aufweist und die neben einer gegenüber Isocyanatgruppen reaktiven Gruppe noch mindestens zwei Hydroxylgruppen enthält, zu einem Makromonomer umgesetzt wird, das im Mittel pro Molekül mindestens eine Carboxylgruppe sowie an einem Ende mindestens zwei Hydroxylgruppen trägt.

Die erfindungsgemäßen Makromonomere haben insbesondere die Vorteile, daß sie neben den Hydroxylgruppen auch noch mindestens eine Carboxylgruppe tragen, auf einfache Art und Weise hergestellt werden können und zur gezielten Herstellung von insbesondere wasserverdünnbaren Polymeren gut geeignet sind.

Die Erfindung sind in dem folgenden Beispiel näher erläutert. Alle Angaben über Teile und Prozentsätze sind Gewichtsangaben, falls nicht ausdrücklich etwas anderes festgestellt wird.

Beispiel

Erste Stufe des erfindungsgemäßen Herstellungsverfahrens (Herstellung eines Zwischenproduktes)

In einem 3-Liter-Vierhalskolben, ausgerüstet mit Rührer, Thermometer und Rückflußkühler, werden 1040 g (1 Mol) eines Polyesterdiols aus Neopentylglykol und Adipinsäure mit einer OH-Zahl von 108 eingewogen und auf 80 °C erhitzt. Dann werden 152 g (1 Mol) Tetrahydrophthalsäureanhydrid zugegeben, und die Mischung wird 1 h bei 80 ° gerührt.

Anschließend gibt man 157 g wasserfreies Methylethylketon zu und hält eine weitere Stunde bei 80 °C. Dann werden 222 g (1 Mol) Isophorondiisocyanat schnell zugegeben. Sobald das Reaktionsgemisch homogen geworden ist, gibt man 1 g Dibutylzinndilaurat und 314 g wasserfreies Methylethylketon zu und rührt bei 80 °C so lange, bis der NCO-Gehalt konstant ist (1,8 bis 2,1 Gew.-%, theor. 2,2 Gew.-%).

Zweite Stufe des erfindungsgemäßen Herstellungsverfahrens (Herstellung eines Makromonomers)

In einen 3-Liter-Vierhalskolben, ausgerüstet mit Rührer, Thermometer und Rückflußkühler, werden 200 g Di-Trimethylolpropan (die Einwaage richtet sich nach dem NCO-Gehalt des Zwischenproduktes; pro NCO-Äquivalent wird 1 Mol Di-Trimethylolpropan eingesetzt) und 540 g wasserfreies Methylethylketon eingewogen und unter Rühren auf 80 °C erhitzt. Sobald sich das Di-Trimethylolpropan vollständig gelöst hat, werden über ein Zulaufgefäß 1885 g der 1. Stufe innerhalb von 2 h zugetropft. Dann wird so lange (etwa 2 h) am Rückfluß gekocht (bei ca. 90 °C), bis der NCO-Gehalt unter 0,02 Gew.-% gefallen ist. Schließlich wird durch Abdestillieren von Methylethylketon auf 75 Gew.-% Festkörpergehalt aufkonzentriert.

## Patentansprüche

1. Verfahren zur Herstellung von Makromonomeren, die im Mittel pro Molekül mindestens eine Carboxylgruppe sowie an einem Ende mindestens zwei Hydroxylgruppen tragen, dadurch gekennzeichnet, daß
   (1) ein ein zahlenmittleres Molekulargewicht von 300 bis 3000 aufweisendes Polyester-, Polyether-, Polyurethan-, Polyharnstoffoder Polyamidpräpolymer, das im Mittel eine endständige Hydroxyl- oder Aminogruppe und mindestens eine Carboxylgruppe pro Molekül enthält, mit einem Diisocyanat zu einem im Mittel eine endständige Isocyanatgruppe und mindestens eine Carboxylgruppe pro Molekül enthaltenden Zwischenprodukt umgesetzt wird und dieses Zwischenprodukt anschließend
   (2) mit einer Verbindung, die ein zahlenmittleres Molekulargewicht von 90 bis 800 aufweist und die neben einer gegenüber Isocyanatgruppen reaktiven Gruppe noch mindestens zwei Hydroxylgruppen enthält, zu einem Makromonomer umgesetzt wird, das im Mittel pro Molekül mindestens eine Carboxylgruppe sowie an einem Ende mindestens zwei Hydroxylgruppen trägt.

2. Verfahren nach Anspruch 1, dadurch gekennzeichnet, daß das in Stufe (1) eingesetzte Präpolymer ein zahlenmittleres Molekulargewicht von 500 bis 2000 aufweist.

3. Verfahren nach Anspruch 1 oder 2, dadurch gekennzeichnet, daß die in Stufe (2) eingesetzte Verbindung ein zahlenmittleres Molekulargewicht von 120 bis 300 aufweist.

4. Verfahren nach einem der Ansprüche 1 bis 3, dadurch gekennzeichnet, daß als Präpolymer ein

Polyester eingesetzt wird.

5. Verfahren nach einem der Ansprüche 1 bis 4, dadurch gekennzeichnet, daß als Präpolymer ein Präpolymer eingesetzt wird, das im Mittel pro Molekül eine endständige Hydroxyl- oder Aminogruppe und eine endständige Carboxylgruppe enthält.

6. Verfahren nach einem der Ansprüche 1 bis 5, dadurch gekennzeichnet, daß als Präpolymer ein Präpolymer eingesetzt wird, das im Mittel pro Molekül eine endständige Hydroxyl- und eine endständige Carboxylgruppe enthält.

7. Verfahren nach einem der Ansprüche 1 bis 6, dadurch gekennzeichnet, daß als Diisocyanat ein Diisocyanat eingesetzt wird, dessen Isocyanatgruppen an (cyclo)aliphatische Molekülfragmente gebunden sind.

8. Makromonomere, dadurch gekennzeichnet, daß sie nach einem Verfahren gemäß einem der Ansprüche 1 bis 7 erhältlich sind.

**Claims**

1. Process for the preparation of macromonomers which carry an average of at least one carboxyl group per molecule as well as at least two hydroxyl groups at one end, characterised in that
   (1) a polyester, polyether, polyurethane, polyurea or polyamide prepolymer which has a number average molecular weight of 300 to 3000, and contains an average of one terminal hydroxyl or amino group and at least one carboxyl group per molecule, is reacted with a diisocyanate to form an intermediate which contains an average of one terminal isocyanate group and at least one carboxyl group per molecule, and this intermediate is subsequently reacted
   (2) with a compound which has a number average molecular weight of 90 to 800, and contains at least two hydroxyl groups in addition to the group which is reactive to isocyanate groups, to form a macromonomer which carries an average of at least one carboxyl group and, at one end, at least two hydroxyl groups per molecule.

2. Process according to Claim 1, characterised in that the prepolymer used in stage (1) has a number average molecular weight of 500 to 2000.

3. Process according to Claim 1 or 2, characterised in that the compound used in stage (2) has a number average molecular weight of 120 to 300.

4. Process according to any of Claims 1 to 3, characterised in that the prepolymer employed is a polyester.

5. Process according to any of Claims 1 to 4, characterised in that the prepolymer employed is a prepolymer which contains an average of one terminal hydroxyl or amino group and one terminal carboxyl group per molecule.

6. Process according to any of Claims 1 to 5, characterised in that the prepolymer employed is a prepolymer which contains an average of one terminal hydroxyl and one terminal carboxyl group per molecule.

7. Process according to any of Claims 1 to 6, characterised in that the diisocyanate employed is a diisocyanate whose isocyanate groups are bound to (cyclo)aliphatic molecular fragments.

8. A macromonomer which can be obtained by a process according to any of Claims 1 to 7.

**Revendications**

1. Procédé de fabrication de macromonomères, qui portent, en moyenne par molécule, au moins un groupe carboxyle de même qu'à une extrémité au moins deux groupes hydroxyle, caractérisé par le fait que :

(1) on fait réagir un prépolymère de polyester, polyéther, polyuréthanne, polyurée ou polyamide, qui présente une masse moléculaire moyenne en nombre de 300 à 3000 et qui contient, en moyenne, un groupe hydroxyle ou amino terminal et au moins un groupe carboxyle par molécule, avec un diisocyanate, pour obtenir un produit intermédiaire contenant, en moyenne, un groupe isocyanate terminal et au moins un groupe carboxyle par molécule, et qu'ensuite

(2) on fait réagir ce produit intermédiaire avec un composé, qui présente une masse moléculaire moyenne en nombre de 90 à 800 et qui contient, en dehors d'un groupe réactif vis-à-vis des groupes isocyanate, encore au moins deux groupes hydroxyle, pour obtenir un macromonomère, qui porte, en moyenne par molécule, au moins un groupe carboxyle ainsi qu'à une extrémité, au moins deux groupes hydroxyle.

**2.** Procédé selon la revendication 1, caractérisé par le fait que le prépolymère utilisé à l'étape (1) présente une masse moléculaire moyenne en nombre de 500 à 2000.

**3.** Procédé selon l'une des revendications 1 ou 2, caractérisé par le fait que le composé utilisé à l'étape (2) présente une masse moléculaire moyenne en nombre de 120 à 300.

**4.** Procédé selon l'une des revendications 1 à 3, caractérisé par le fait qu'on utilise un polyester comme prépolymère.

**5.** Procédé selon l'une des revendications 1 à 4, caractérisé par le fait que, comme prépolymère, on utilise un prépolymère qui contient, en moyenne par molécule, un groupe hydroxyle ou amino terminal et un groupe carboxyle terminal.

**6.** Procédé selon l'une des revendications 1 à 5, caractérisé par le fait que, comme prépolymère, on utilise un prépolymère qui contient, en moyenne par molécule, un groupe hydroxyle terminal et un groupe carboxyle terminal.

**7.** Procédé selon l'une des revendications 1 à 6, caractérisé par le fait que, comme diisocyanate, on utilise un diisocyanate dont les groupes isocyanate sont liés à des fragments moléculaires (cyclo)-aliphatiques.

**8.** Macromonomères, caractérisés par le fait qu'ils peuvent être obtenus par un procédé tel que défini à l'une des revendications 1 à 7.